# EUROPEAN PATENT APPLICATION

(11) **EP 1 566 960 A1**
(43) Date of publication of application: **24.08.2005**
(21) Application number: 05075084.3
(22) Date of filing: 11.01.2005
(51) Int. Cl.: H04N 3/15

(54) **"Method for increasing the perceived resolution and decreasing the pixelisation of an image and imaging apparatus used thereby".**

(30) Priority: 20.02.2004 US 781708
(71) Applicant: Barco, naamloze vennootschap., 8500 Kortrijk (BE)
(72) Inventor: Maes, Dirk, 8930 Lauwe (BE)
(74) Representative: Donné, Eddy

(57) **Abstract**

A method and imaging apparatus for increasing the perceived resolution and decreasing the pixelisation of an image in applications involving a digital imaging apparatus comprising a lens and an imaging device, such as a display or a sensor, with a relatively low native resolution and comprising an array of pixels, the imaging device being used to sample the image, whereby the method consists of increasing the sampling rate, thereby sampling the image a multiple times, and, for each subsequent sampling, offsetting the apparent relative position between the imaging device and the lens.

## Description

### FIELD OF THE INVENTION

The present invention relates to a method for increasing the perceived resolution and decreasing the pixelisation of an image in applications with a digital imaging apparatus like a projection device, a camera, a printer and the,like, with a relatively low native resolution, comprising a lens and an imaging device with a plurality of pixels, such as a display or a sensor.

The invention also relates to an imaging apparatus allowing to use the method of the invention.

### BACKGROUND OF THE INVENTION

Methods are known for treating high resolution images by means of a digital imaging apparatus with an imaging device with limited resolution, in other words with a limited number of pixels.

In this case the original image is resampled to an image with a lower resolution.

It is clear that with the existing methods, the perceived resolution is limited by the native resolution of the imaging device, leading to an image with little sharpness and pixels which are very much visible individually, due to the gaps between pixels. These methods are also known to be subject to aliasing effects associated with the sampling or resampling of the original image.

A higher perceived resolution could of course be obtained by increasing the resolution of the imaging device by increasing the number of pixels, but such devices with an increased native resolution require extensive research to develop and are hence complex and costly, especially where the increase in resolution translates into bigger silicon based chips or in unacceptable fill factors.

### SUMMARY OF THE INVENTION

It is therefore an object of the invention to provide for a simple and relatively cheap method for increasing the perceived resolution and at the same time for decreasing the pixelisation of an image in applications involving a digital imaging apparatus comprising a lens and an imaging device with a relatively low native resolution, such as a display or a sensor, comprising a plurality of pixels.

To this end the present invention provides for a method which consists of increasing the sampling rate, thereby sampling the image multiple times, and, for each subsequent sampling, offsetting the apparent relative position between the imaging device and the lens.

The offset of the apparent relative position between the imaging device and the lens can be realized either by offsetting the imaging device, or by offsetting the lens, or by changing the trajectory of the image between the image device and the lens, for example by using the parallax effect of a transparent plate which can be tilted in order to change said trajectory.

By increasing the sampling frequency and by creating an offset of the apparent position between the imaging device and the lens, it is possible to increase the sharpness and the perceived resolution of the image, whilst aliasing effects are avoided. At the same time gaps between pixels become masked, reducing pixel visibility.

The approach of the present invention allows increasing the perceived resolution in projection displays and camera images by increasing the sampling rate, rather than increasing the native resolution of the sensor or displaying itself. It can be used to push the resolution in demanding applications or reduce cost in others. It further allows a flexible switch over between low resolution/high resolution operations.

In general, any system based upon a lens and sensor or a lens and display combination can benefit from the present invention. This leads to the main application areas of digital cameras, digital printing and digital projection.

It is possible to offset the apparent relative position between the imaging device and the lens in horizontal or in a vertical direction position, or diagonally as a combination of both.

In order to avoid any flicker of details, the frame rate in each position would have to be sufficiently high, what could limit the number of different positions practically feasible, due to bandwidth limitations on the display or its driving interface.

Following a preferred method, the sampling rate is at least doubled, whereby at least one intermediate image is captured or generated.

Preferably the apparent relative position between the imaging device and the lens is offset over a distance equal to fraction of the dimension of a pixel, for example half a pixel, possibly further increased by the dimension of a number of pixels.

Following a preferred method offset can be realized by tilting a transparent plate situated in the optical trajectory of the image, this plate being situated preferably between the imaging device and the lens and being tilted stepwisely between two or more angular positions in a synchronized manner with the increased sampling frequency.

The present invention also concerns an imaging apparatus allowing to increase the perceived resolution and to decrease pixelisation of an image following the above discussed method according to the invention, comprising a housing, at least a lens and a digital imaging device, such as a display or a sensor, with a relatively low resolution and comprising an array of pixels for sampling images with a given sampling rate, wherein the imaging apparatus further comprises means for offsetting the apparent relative position between the imaging device and the lens.

### BRIEF DESCRIPTION OF THE DRAWINGS

With the intention of better showing the characteristics of the invention, hereafter, as an example without any limitative character, a preferred method for increasing the perceived resolution and decreasing the pixelisation of an image and a number of preferred forms of embodiment of an imaging apparatus according to the invention are described, with reference to the accompanying drawings, wherein:
figure 1A illustrates a digital image of a vertical line;
figure 1B illustrates the image of figure 1A, converted to a lower resolution;
figure 1C illustrates the image of figure 1A, converted to the same lower resolution as figure 1B, but with the pixel array shifted half a pixel in diagonal direction;
figure 1D shows the image perceived and obtained by superposing the images of figures 1B and 1C;
figures 2A to 2D and figures 3A to 3D are similar to the figures 1A to 1B, but for another digital image;
figure 4 schematically represents an imaging apparatus according to the invention;
figures 5 shows the device of figure 4 in a different position;
figure 6 represents a variant of the device of figure 4.

### DETAILED DESCRIPTION OF A PREFERRED EMBODIMENT

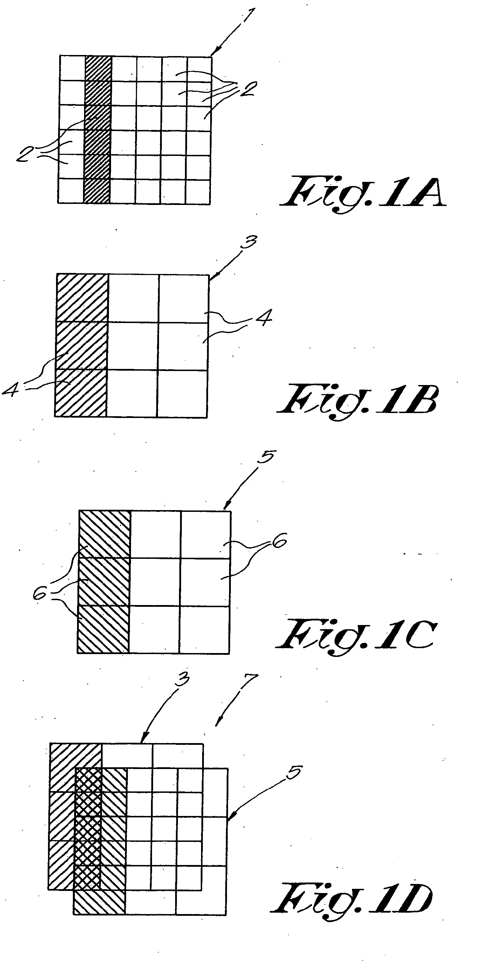

Figure 1A illustrates an example of a virtual digital image 1 in its original resolution of 6x6 pixels 2.

In this case the image represents a vertical line of 1x6 pixels.

Figure 1B represents the sampled image 3 of figure 1A but converted to the lower native resolution with 3x3 pixels 4 of an imaging device of an imaging apparatus, for example the display of a projector.

In this example the incoming pixel data of the virtual image 1 are converted to the sampled image 3 using a known algorithm whereby, for example, the intensity of each pixel, of the sampled image 3 is proportional with the surface overlap, corresponding to how a CCD sensor with 100% fill factor would respond.

Since in the example shown, each of the activated pixels 4 on the left side of the sampled image 3 are overlapped by two pixels 2- of the virtual image, corresponding to an overlap of half the area of said pixels 4, the intensity of each of these pixels is half the intensity of the pixels 2 of the virtual image 1.

Other algorithms for converting the incoming virtual image 1 to a different resolution are not excluded.

According to the present invention the sampling rate of the incoming image is increased, thereby sampling the image multiple times, and, for each subsequent sampling, offsetting for example the position of the imaging device.

The sampling rate is for example doubled, whereby figure 1B represents the first sampled image 3 corresponding to a first sampling position of the imaging device, whilst figure 1C represents the second sampled image 5, with 3x3 pixels 6, corresponding to a second position of the imaging device, this second position being offset in a diagonal direction over a distance equal to half the size of a pixel 4 of the imaging device.

Since the sampled images 3 and 5 are observed with a sample rate that is twice the original sample rate, the perceived image 7 is that obtained by superposing the offset intermediate image 5 on image 3, which results in an image 7 illustrated in figure 1D.

It is clear that the perceived image 7 of figure 1D corresponds more accurately to the original virtual high resolution image 1 of figure 1A than the lower resolution image 3 of figure 1B which would normally be observed on a lower resolution display, without using the method of the present invention.

The quality of the perceived image 7 is thus improved by the method of the invention, resulting in a perceived higher resolution with decreased pixelisation.

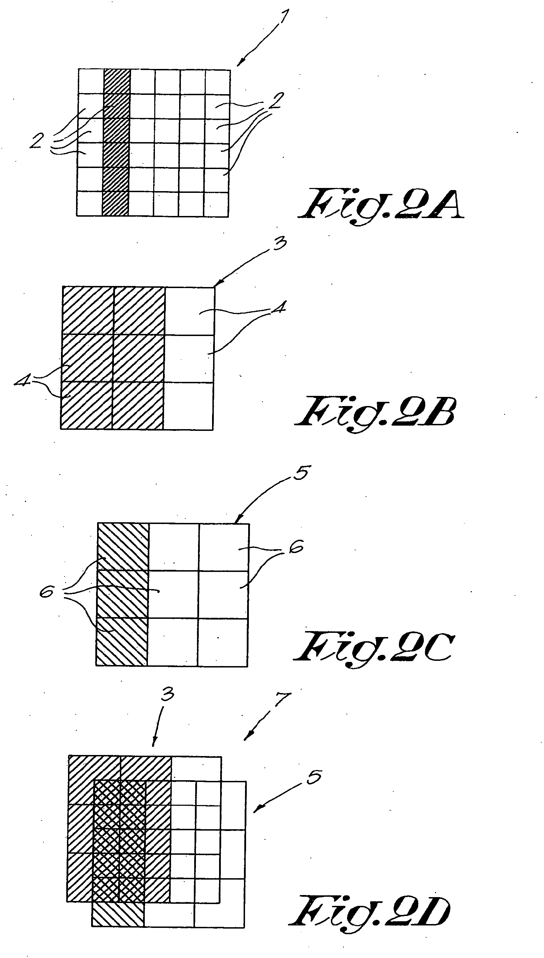

Figures 2A to 2D illustrate the method of the invention in a similar way as figures 1A to 1D, but in this case the position of the vertical line represented by the virtual high resolution image 1 in figure 2B is less favorable, since the pixels of this line overlap six of the larger pixels 4 of the sampled image 3, so that six of these larger pixels 4 are activated with an intensity of 1/4 of the original intensity, whereas, by offsetting the imaging device, the position of the line represented in image 1 is shifted to a more favorable position overlapping only three larger pixels, so that the second sampled image 6 looks like figure 2C.

The observed image 7 is represented in figure 2D and still has a better quality than the sampled image represented by figure 2B, which would be observed without the method of the invention.

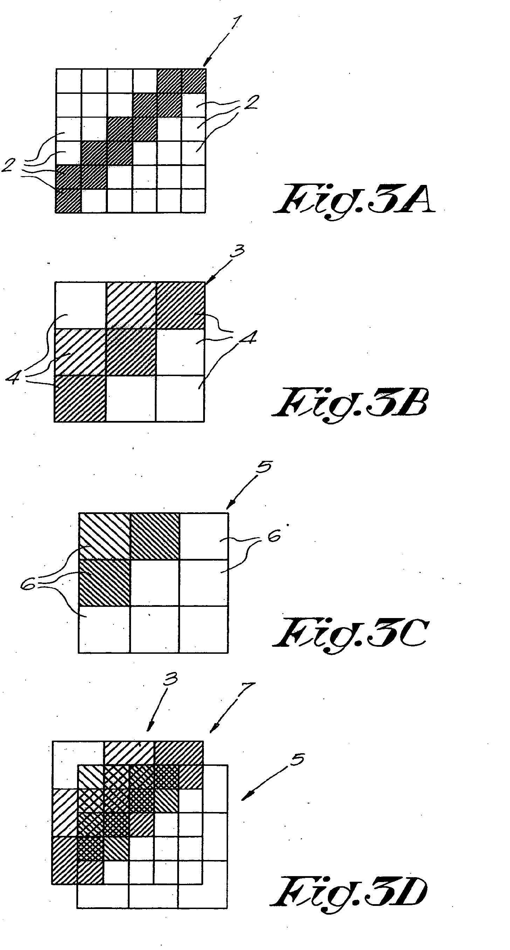

Figures 3A to 3B illustrate the same method, but in this case starting from a high resolution image 1 representing a slanting line.

As is shown in figure 3D, the observed image 7 using the method of the invention, has an improved quality over the image 3B observed without using this method.

It is clear that, depending on the bandwith limitations of the imaging apparatus or its driving interface, the sample rate can be more than doubled.

Also it is clear that the offset distance of the imaging device can be different from the examples shown.

An offset distance of a fraction of the size of a pixel would be possible, for example half, one third, one quarter, ... , the size of a pixel.

It would not be excluded also to offset the imaging device over a distance equal to the size of a number of pixels, plus a fraction of the size of a pixel.

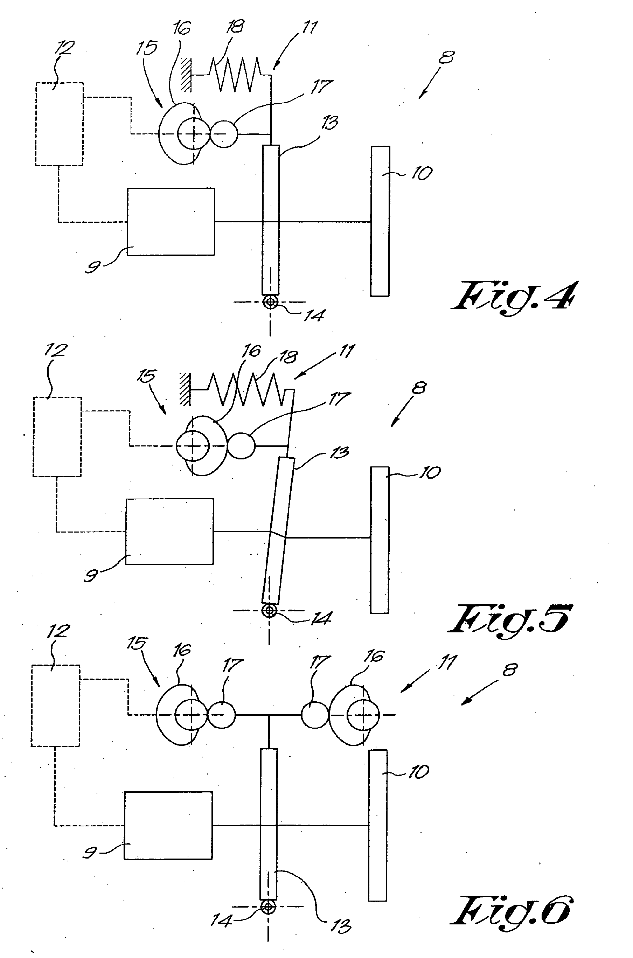

Figure 4 represents a digital imaging apparatus 8, in this case a projector, according to the invention allowing to increase the perceived resolution and to decrease pixelisation of an image following the above described method, said device consisting of a housing which is not represented; a projection lens 9; an imaging device 10 in the form of a display; means 11 for offsetting the apparent relative position between the imaging device 10 and the lens 9; and a controller 12.

Said means 11 are represented in figure 4 as a possible implementation of a single direction offset mechanism for offsetting images on the imaging device 10 in a vertical direction, which mechanism is formed by a transparent plate 13 positioned between the lens 9 and the imaging device 10, said transparent plate 13 being rotatably fixed on a horizontal shaft 14, and driving means 15 to rotate the plate 13 in an alternating manner between a first predetermined vertical position parallel to the imaging device 10 as represented in figure 4, and a second slightly tilted position, as represented in figure 5.

In the example shown, the driving means 15 comprise a rotating camshaft 16 which is driven by a motor which is not represented and a cam follower 17 which is connected to the transparent plate 13 and which is kept in contact with said camshaft 16 by means of a spring 18 which is attached to the transparent plate 13, on the one hand, and to the housing of the imaging apparatus 8, on the other hand.

The motor of the driving means 15 is electrically connected to the controller 12, for synchronizing the speed of the camshaft 16 to the sampling rate of the images. If for the incoming image 1 two sampled images 3 and 5 are generated for projection, then the camshaft 16 must have a speed of one revolution for each incoming image 1.

When the transparent plate 13 is in its vertical position parallel to the imaging device 10, as represented in figure 4, then the first sampled image 3 is projected through the transparent plate 13 without alteration of its path.

When, on the contrary, the transparent plate 13 is tilted to the second position of figure 5, then the second sampled image 5 is shifted downwardly due to the well known parallax effect.

The movement of the transparent plate 13 will be synchronized in such a way that the transparent plate 13 is positioned vertically for the projection of each first sampled image 3 and is slightly tilted for the projection of each of the second sampled image 5.

From the description above it is obvious how the imaging apparatus 8 can be used for the application of the above described method according to the invention.

It is clear that the transparent plate 13 can also be tilted between two angular positions which are for example positioned symmetrically on both sides of the vertical position.

Figure 6 represents another embodiment of an imaging apparatus 8 according to the invention, which differs from the device of figure 4, in that in this case two similar camshafts 16 and cam followers 17 are used to move the transparent plate 13, whereby these camshafts 16 are positioned at opposite sides of the plate 13 and whereby these camshafts 16 work in an opposite way.

Other types of driving means 15 for tilting the transparent plate 15 between angular positions are not excluded.

Instead of using a transparent plate 13 for offsetting the apparent relative position between the lens 9 and the imaging device 10, other solutions are possible, like e.g. by altering the relative position between the lens 9 and the imaging device 10, by movement of either the lens or the imaging device or both.

The imaging apparatus can also be equipped with means for simultaneous vertical and horizontal movement of the frames, e.g. by means of two separate transparent plates 13, one plate being pivotably mounted on a horizontal shaft, the other being pivotably mounted on a vertical shaft, realizing a combined diagonal movement in this way.

Although the imaging apparatus 8 has been described as a projector, the invention also relates to other types of an imaging appartus 8, like cameras, printers and the like.

The present invention is in no way limited to the method and to the form of embodiment described by way of example and represented in the figures, however, such a method and imaging apparatus according to the invention, can be realized in various forms without leaving the scope of the invention.

## Claims

1. A method for increasing the perceived resolution and decreasing the pixelisation of an image in applications involving a digital imaging apparatus comprising a lens and an imaging device, such as a display or a sensor, with a relatively low native resolution and comprising an array of pixels, the imaging device being used to sample the image, whereby the method consists of increasing the sampling rate, thereby sampling the image a multiple times, and, for each subsequent sampling, offsetting the apparent relative position between the imaging device and the lens.

2. The method according to claim 1, wherein the sampling rate is at least doubled.

3. The method according to claim 1, wherein the apparent relative position between the imaging device and the lens is offset in a horizontal and or a vertical direction.

4. The method according to claim 1, wherein the apparent relative position between the imaging device and the lens is offset in a diagonal direction.

5. The method according to claim 1, wherein the apparent relative position between the imaging device and the lens is offset at least over a distance equal to a fraction of the size of a pixel.

6. The method according to claim 5, wherein the apparent relative position between the imaging device and the lens is offset over a distance equal to the size of a number of pixels plus a fraction of the size of a pixel.

7. The method according to claim 1, wherein the apparent relative position between the imaging device and the lens is offset by either offsetting the imaging device or by offsetting the lens, or by offsetting both the imaging device and the lens.

8. The method according to claim 1, wherein the apparent relative position between the imaging device and the lens is offset by tilting a transparent plate situated in the optical trajectory of the image.

9. The method of claim 8, herein the transparent plate is situated between the imaging device and the lens.

10. The method of claim 8, wherein the transparent plate is tilted stepwisely between two or more angular positions in a synchronized manner with the increased sampling frequency.

11. An imaging apparatus allowing to increase the perceived resolution and to decrease the pixelisation of an image according to the method of one of the preceding claims, comprising a housing, at least a lens and a digital imaging device, such as a display or a sensor, with a relatively low resolution and comprising an array of pixels for sampling images with a given sampling rate, wherein the imaging apparatus further comprises means for offsetting the apparent relative position between the imaging device and the lens.

12. The imaging apparatus according to claim 11, wherein the means for offsetting the apparent relative position between the imaging device and the lens are formed by a transparent plate positioned between the lens and the imaging device, said transparent plate being rotatably fixed on a shaft, and driving means to rotate the plate in an alternating manner between predetermined angular positions.

13. The imaging apparatus according to claim 12, wherein the driving means to rotate the transparent plate comprise at least one rotating camshaft driven by a motor and a cam follower which is in contact with said camshaft and which is connected to the transparent plate.

14. The imaging apparatus according to claim 13, wherein the transparent plate is connected to a spring which is attached to the housing of the imaging apparatus.

15. The imaging apparatus according to claim 13, wherein the rotating speed of the motor is such that tilting the transparent plate between angular position is synchronized with the sampling rate.

16. The imaging apparatus according to claim 12, wherein the transparent plate is alternatingly tilted back and forth between two predetermined angular positions parallel to the imaging device or slightly tilted in respect to the imaging device.

17. The imaging apparatus according to claim 11, wherein said device is a digital camera.

18. The imaging apparatus according to claim 11, wherein said device is a digital projecting device.

19. The imaging apparatus according to claim 11, wherein said device is a digital printing device.
